# EUROPEAN PATENT SPECIFICATION

(11) **EP 2 479 828 B1**
(45) Date of publication and mention of the grant of the patent: **24.08.2016**
(21) Application number: 12152050.6
(22) Date of filing: 23.01.2012
(51) Int. Cl.: H01M 8/06, B01J 15/00, B01J 16/00, B01J 47/02

(54) **Depurant container device for fuel cell system and fuel cell system including thereof**
Reinigungsvorrichtung für Brennstoffzellensystem und Brennstoffzellensystem damit
Dispositif de dépuration pour système de pile à combustible et système de pile à combustible l'incluant

(30) Priority: 24.01.2011 JP 2011011638; 12.01.2012 JP 2012004261
(43) Date of publication of application: 25.07.2012
(73) Proprietor: Aisin Seiki Kabushiki Kaisha, Aichi 448-8650 (JP); TOYOTA JIDOSHA KABUSHIKI KAISHA, Toyota-shi, Aichi-ken, 471-8571 (JP); Futaba Industrial Co. Ltd., Okazaki-shi, Aichi 444-8558 (JP)
(72) Inventor: Shinoda, Kazunobu, Kariya-shi, Aichi 448-8650 (JP); Kato, Tetsuo, Okazaki-shi, Aichi (JP); Suzuki, Tomoyuki, Okazaki-shi, Aichi (JP); Osaki, Hiroshi, Okazaki-shi, Aichi (JP)
(74) Representative: TBK

(56) References cited:
- WO-A2-2010/026875
- JP-A- 2003 269 802
- JP-A- 2008 117 652
- US-A- 3 898 049

## Description

### TECHNICAL FIELD

This disclosure generally relates to a depurant container device for a fuel cell system and a fuel cell system including the depurant container.

### BACKGROUND DISCUSSION

Backgrounds technology will be explained with reference to, for example, a desulfurizer which removes an odorant included in fuel applied to a fuel cell system. When designing the desulfurizer for containing a desulfurization agent, it is critical to effectively use the desulfurization agent in a limited space of the desulfurizer while reducing costs. In order to effectively use the desulfurization agent In the limited space of the desulfurizer while reducing costs, a known system includes a desulfurizer provided with an intermediate plate member which defines a portion for changing a flowing direction in a U-shape inside a container serving as the desulfurizer in order to control fuel flow stream. For example, JP2008-117652A (i.e., hereinafter referred to as Patent reference 1), JP2007-273142A (i.e., hereinafter referred to as Patent reference 2), and JP2005-15543A (i.e., hereinafter referred to as Patent reference 3) disclose systems which includes the desulfurizer provided with the intermediate plate member for changing a flowing direction in a U-shape inside the container serving as the desulfurizer, and in which a biased flow of the fuel gas in the container is prevented and an Intentional fuel flow Is formed to effectively utilize the desulfurizer.

According to the constructions of the desulfurizers disclosed In Patent references 1 to 3, manufacturing the desulfurizers is not necessarily easy. Particularly, structures for fixing the intermediate plate member inside the container while sealing the intermediate plate at joining portions in order to flow the fuel to change a flowing direction in a U-shape. Manufacturing process for those structures is not necessarily easy. Because manufacturing the desulfurizers is not easy, there is a risk that the joining portions (e.g., welding portion, brazing portion) with high sealing performance may not be obtained during the manufacturing process. In those circumstances, there is a risk that the fuel gas leaks via the joining portions, and the fuel gas may be outputted to a reformer via an output port without sufficient desulfurization, which is not favorable.

A need thus exists for a depurant container device for a fuel cell system and a fuel cell system including the depurant container device, which is readily manufactured and is favorable for forming joining portions with a high sealing performance.

A device according to WO 2010/026875 A2 is provided with the features according to the preamble of claim 1.

US 3898049 discloses a cylindrical hydrogenation reactor for a liquid fluid flow, the reactor comprising inlet, outlet and (at least) an intermediate plate member leaving an opening on the upper portion of the container, thereby guiding the flow of fluid in a U-shape. Inlet and outlet are each covered by a screen for retaining the catalyst particles.

### SUMMARY

In light of the foregoing, the invention provides a depurant container device for a fuel cell system introducing a gas-phased or liquid-phased fluid, which is used at the fuel cell system and is to be depurated, via an inlet port and outputting the depurated fluid to an outside the device via an outlet port after flowing and changing a flowing direction in a U-shape therein. The depurant container device includes an intermediate plate member including a first surface and a second surface provided at opposite sides, and an opening for flowing the fluid in a U-shape between the inlet port and the outlet port, a first fluid passage forming member forming a first fluid passage through which the fluid flows, and a second fluid passage forming member forming a second fluid passage which is in communication with the first fluid passage via the opening. The first fluid passage forming member contacts the first surface of the intermediate plate to be joined thereto by a joining portion, the second fluid passage forming member contacts the second surface of the intermediate plate to be joined thereto by the joining portion so that the depurant container device is sealed and a depurant is contained in the first fluid passage and the second fluid passage, wherein the joining portion is outwardly exposed.

According to another aspect of the invention, the first fluid passage forming member and the second fluid passage forming member are formed in a U-shape, a V-shape, or a C-shape in a cross section which is cut along a direction orthogonal to a flowing direction of the fluid from being introduced to the inlet port until reaching the opening.

According to further aspect of the invention, the joining portion is exposed outward at a/the cross section which is cut along a direction orthogonal to a flowing direction of the fluid from being introduced to the inlet port until turning at the opening.

According to still further apse to the invention, the depurant container device further includes a first closing plate joined to a first end of the intermediate plate member, the first fluid passage forming member, and the second fluid passage forming member in the flowing direction of the fluid for closing a first end of the first fluid passage and the second fluid passage in a longitudinal direction, and a second closing plate joined to a second end of the intermediate plate member, the first fluid passage forming member, and the second fluid passage forming member in the flowing direction of the fluid for closing a second end of the first fluid passage and the second fluid passage in the longitudinal direction.

According to still another aspect of the invention, a side end portion of the intermediate plate member is exposed while protruding from the first fluid passage forming member and the second fluid passage forming member at a/the cross section which is cut along a direction orthogonal to a flowing direction of the fluid from being introduced to the inlet port until reaching the opening.

According to further aspect of the invention, the depurant container device further includes a retaining member including holes for passing the fluid, the retaining member provided in an excessive space of the first fluid passage and/or the second fluid passage for restraining a floating movement of the depurant.

According to another aspect of the invention, the first fluid passage is connected to the inlet port, the second fluid passage is connected to the outlet port, and a size of the hole of the retaining member provided at the second fluid passage is smaller than a size of the hole of the retaining member provided at the first fluid passage.

According to still another aspect of the invention, a fuel cell system includes a fuel cell to which an anode fluid and a cathode fluid are supplied for generating an electric power, a reforming portion forming the anode fluid by reforming a fuel using a water vapor, a fuel passage for supplying the fuel to be the anode fluid to the reforming portion, and a desulfurizer provided at the fuel passage for containing a desulfurization agent which purifies the fuel by removing an odorant included in a fuel as the depurant. The desulfurizer is constructed with the depurant container device for the fuel cell system according the foregoing structure.

According to the construction of the disclosure, the first fluid passage forming member forming the first fluid passage is attached to the first surface of the intermediate plate member and is joined thereto by the joining portion to be sealed. The second fluid passage forming member forming the second passage is attached to the second surface of the intermediate plate member and is joined hereto by the joining portion to be sealed. Thus, the first fluid passage forming member forming the first fluid passage and the second fluid passage forming member forming the second fluid passage can be readily joined at the intermediate plate member to be positioned opposite each other, and the assembling and manufacturing of the device is assumed to be easy. In consequence, the joining portion for joining the first fluid passage forming member and the second fluid passage forming member to the intermediate plate member is favorably formed, thus attaining the joining portion having high sealing performance. Thus, a leakage of fluid, for example, a fuel or the water between the first fluid passage and the second fluid passage via an intermediate plate member and a joining portion having a clearance therebetween formed due to faulty sealing is restrained. Accordingly, the fluid, for example, the fuel or the water can be sufficiently purified by the depurant, for example, the desulfurization agent or the water purifier. Thus, an output of the fuel or the water which is not sufficiently purified by the depurant to a system provided at a downstream of an outlet port (e.g., a reformer, or a fuel cell) is restrained, and a reliability of the system in a long term is enhanced

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view of a desulfurizer which is cut along a fuel flow direction according to a first embodiment disclosed here;
Fig. 2 is a cross-sectional view of the desulfurizer which is cut along a direction orthogonal to the fuel flow direction;
Fig. 3 is a perspective view schematically showing a manufacturing process of the desulfurizer;
Fig. 4 is a perspective view schematically showing the produced desulfurizer;
Fig. 5 is a partial perspective view schematically showing a main portion of the manufactured desulfurizer;
Fig. 6 is a cross-sectional view of a desulfurizer which is cut along a direction orthogonal to a fuel flow direction according to a third embodiment disclosed here;
Fig. 7 is a cross-sectional view of a desulfurizer which is cut along a direction orthogonal to a fuel flow direction according to a fourth embodiment disclosed here;
Fig. 8 is a perspective view showing a desulfurizer according to a comparison example;
Fig. 9 is a cross-sectional view of a desulfurizer which is cut along a direction orthogonal to a fuel flow direction according to a fifth embodiment disclosed here;
Fig. 10 is a cross-sectional view of a desulfurizer which is cut along a direction orthogonal to a fuel flow direction according to a sixth embodiment disclosed here;
Fig. 11 is a cross-sectional view of a desulfurizer which is cut along a direction orthogonal to a fuel flow direction according to a seventh embodiment disclosed here;
Fig. 12 is a cross-sectional view showing a vicinity of a side end portion of an intermediate plate according to an eighth embodiment disclosed here;
Fig. 13 is a cross-sectional view of a desulfurizer which is cut along a direction orthogonal to a fuel flow direction according to a ninth embodiment disclosed here;
Fig. 14 is a perspective view schematically showing a manufactured desulfurizer according to a tenth embodiment disclosed here;
Fig. 15 is a perspective view schematically showing a manufacturing process of the desulfurizer according to the tenth embodiment disclosed here;
Fig. 16 is a cross-sectional view showing the desulfurizer which is cut along a direction orthogonal to a fuel flow direction according to the tenth embodiment disclosed here;
Fig. 17 is a cross-sectional view showing the desulfurizer which is cut along the fuel flow direction according to the tenth embodiment disclosed here;
Fig. 18 is a cross-sectional view showing a desulfurizer which is cut along a direction orthogonal to a fuel flow direction according to a modified example of the tenth embodiment disclosed here;
Fig. 19 is a view showing a fuel cell system according to a first construction;
Fig. 20 is a view showing a fuel supply passage for the fuel cell system according to a second construction.

### DETAILED DESCRIPTION

Embodiments of a depurant container device for a fuel cell system and a fuel cell system including the depurant container device will be explained with reference to illustrations of drawing figures as follows.

According to the embodiment, when the depurant container device is applied to the desulfurizer, a fluid corresponds to a fuel which includes an odorant, and a depurant, for example, corresponds to zeolite or activated carbon which removes the odorant included in the fuel. When the depurant container device is applied to a water purifier, according to the embodiment, the fluid corresponds to the water which is to be the vapor for vapor-reforming the fuel, and a water purification agent, for example, an ion-exchange resin is applied as the depurant, and a purification chamber contains the water purification agent which helps purifying the water by removing impurities included in the water.

According to the embodiment, a first fluid passage forming member is formed in a U-shape, a V-shape, or a C-shape in a cross-section which is cut along a direction orthogonal to a flowing direction of the fluid. According to the embodiment, a joining portion is exposed outwardly at the cross section. In those circumstances, in a case where a faulty sealing at the joining portion exist, because the faulty sealing is inspected from the outside with naked eyes, the faulty sealing is readily found without a strict flaw detection test. For example, the joining portion may be inspected by naked eyes. Alternatively, for example, the joining portion may be inspected by flowing the fluid in a state where a coating by soap water is applied thereto. In those circumstances, because the coating by soap water is deformed (e.g., inflated) by the leakage, the visual Inspection is readily performed.

According to the embodiment, a side end portion of the intermediate plate is exposed outwardly from the first fluid passage forming member and the second fluid passage forming member at the cross-section. According to the foregoing construction, the joining portion is readily exposed to the outside. Thus, in a case where a faulty sealing of the joining portion exists, as described above, because the faulty sealing is visually inspected, the faulty sealing is readily found without strict flaw detection. Accordingly, the reliability of sealing maintenance is enhanced.

According to the embodiment, a first closing plate joined to a first end of the intermediate plate, a first end of the first fluid passage forming member, and a first end of the second fluid passage forming member in the flowing direction of the fluid for closing a first end of a first fluid passage and a first end of a second fluid passage in a longitudinal direction is provided. Further, a second closing plate joined to a second end of the intermediate plate, a second end of the first fluid passage forming member, and a second end of the second fluid passage forming member in the flowing direction of the fluid for closing a second end of the first fluid passage and a second end of the second fluid passage in the longitudinal direction is provided. According to the embodiment, a depurant for depurating (purifying) the fluid is contained in the first fluid passage and the second fluid passage, and a retaining member including holes for passing the fluid is provided in a room (a remained space) of the first fluid passage and/or the second fluid passage for restraining a floating movement of the depurant. According to the foregoing construction, the floating movement of the depurant by, for example, the oscillation and/or vibration is restrained, and thus restraining the damages to the depurant and the depurant is restrained from being fine powdered form. Fibrous woven or nonwoven gas permeable material is, for example, applied as the retaining member. According to the embodiment, the first fluid passage is connected to an inlet port, the second fluid passage is connected to an outlet port, and a size of the hole of the retaining member provided at the second fluid passage is smaller than a size of the hole of the retaining member provided at the first fluid passage. According to the foregoing construction, because the size of the holes formed on the retaining member provided closer to the outlet port side is relatively small, the movement of the depurant which is in a fine powder form to the downstream is restrained and a drawback, for example, clogging of the depurant which is in a fine powder form at the downstream of the desulfurizer is restrained. Because the size of the holes of the retaining member provided at the inlet port side is relatively large, a resistance for introducing the fluid, fuel and water, is reduced.

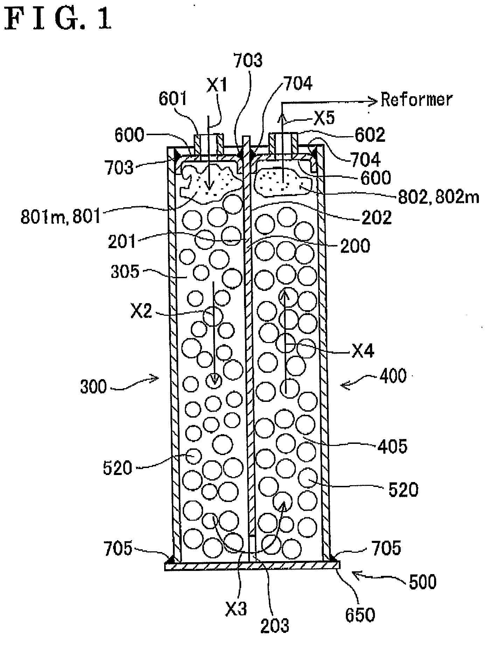

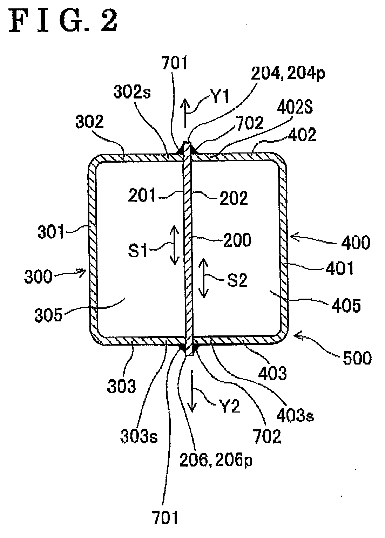

Figs. 1-5 show the Idea of a first embodiment. Fig. 1 shows a desulfurizer applied to a fuel cell system (i.e., serving as a depurant container device for a fuel cell system). As shown in Fig. 1, the desulfurizer introduces a fuel in a form of gas (a fluid) which needs to be purified (which needs to be depurated) and which is applied to the fuel cell system in an arrowed direction X1 to a first fluid passage 305 via an inlet port 601, flows the fuel in an arrowed direction X2, changes a flowing direction of the fuel in an arrowed direction X3, further leads the fuel in a second fluid passage 405 to flow in an arrowed direction X4, and leads the fuel to be outputted to the outside via an outlet port 602 in an arrowed direction X5. Fig. 1 shows a cross-sectional view cut along a fluid flow direction (i.e., in the arrowed direction X1, X2) in which the fluid flows from the inlet port 601 until changing the flowing direction. Fig. 2 shows a cross-sectional view cut along a direction orthogonal to the fluid flow direction (i.e., orthogonal to the arrowed direction X1, X2) flowing from the inlet port 601 until changing the flowing direction.

As shown in Fig. 1, an intermediate plate member 200 is made of metal and includes a first surface 201 and a second surface 202 which are opposite planer surfaces from each other. An opening 203 is formed at an end (a bottom end in Fig. 1) of the fluid flow direction (i.e., in the arrowed direction X1) at the intermediate plate member 200. The opening 203 is provided for changing the flowing direction of the fuel (fluid) in an U-shape at an intermediate position between the inlet port 601 and the outlet port 602. As shown in Fig. 2, a first fluid passage forming member 300 made of metal includes a first intermediate wall 301 extending along an extending direction of the first surface 201 of the intermediate plate member 200 (i.e., an arrowed direction S1), a first end wall 302 formed extending from a first end of the first intermediate wall 301 towards the first surface 201 of the intermediate plate member 200, and a first opposing wall 303 formed extending from a second end of the first intermediate wall 301 towards the first surface 201 of the intermediate plate member 200 while opposing the first end wall 302. The first fluid passage forming member 300 includes an approximately U-shape in a lateral cross-section so that a first fluid passage 305 has an approximately square-shape in a lateral cross-section.

As shown in Fig. 2, a second fluid passage forming member 400 made of metal includes a second intermediate wall 401 extending along an extending direction of the second surface 202 of the intermediate plate member 200 (i.e., an arrowed direction S2), a second end wall 402 formed extending from a first end of the second intermediate wall 401 towards the second surface 202 of the intermediate plate member 200, and a second opposing wall 403 formed extending from a second end of the second intermediate wall 401 towards the second surface 202 of the intermediate member 200 while opposing the second end wall 402. The second fluid passage forming member 400 includes an approximately U-shape which defines a second fluid passage 405. In a cross-section shown in Fig. 2, which shows a cross-section cut in a direction orthogonal to a fuel flow direction, a first side end portion 204 of the intermediate plate member 200 protrudes in an arrowed direction Y1 from the first end wall 302 of the first fluid passage forming member 300 and the second end wall 402 of the second fluid passage forming member 400 while being exposed to an outside. Thus, a first protruding portion 204p is formed. With the forgoing construction, a side portion 302s of the first end wall 302 of the first fluid passage forming member 300 readily comes to contact with the first surface 201 of the intermediate plate member 200, and a side portion 402s of the second end wall 402 of the second fluid passage forming member 400 readily comes to contact with the second surface 202 of the intermediate plate member 200. As shown in Fig. 2, a second side end portion 206 of the intermediate plate member 200 protrudes in an arrowed direction Y2 from the first opposing wall 303 of the first fluid passage forming member 300 and the second opposing wall 403 of the second fluid passage forming member 400 to be exposed to the outside, thus forming a second protruding portion 206p. According to the foregoing construction, a side portion 303s of the first opposing wall 303 of the first fluid passage forming member 300 readily comes to contact with the first surface 201 of the intermediate plate member 200, and a side portion 403s of the second opposing wall 403 of the second fluid passage forming member 400 readily comes to contact with the second surface 202 of the intermediate plate member 200. Accordingly, an assembility of the first fluid passage forming member 300 and the second fluid passage forming member 400 is enhanced. In those circumstances, for example, the metal includes carbon steel, alloy steel, and/or aluminum alloy (i.e., the metal which is a material for the intermediate plate member 200, the first fluid passage forming member 300, and the second fluid passage forming member 400, for example, corresponds to carbon steel, alloy steel, and/or aluminum alloy).

As shown in Fig. 2, the first end wall 302 of the first fluid passage forming member 300 and the first opposing wall 303 are seated onto the first surface 201 of the intermediate plate member 200 and are joined to the first surface 201 at a joining portion 701 to be sealed. The second end wall 402 of the second fluid passage forming member 400 and the second opposing wall 403 are seated onto the second surface 202 of the intermediate plate member 200 and are joined to the second surface 202 at a joining portion 702 to be sealed. In those circumstances, the intermediate plate member 200 serves as reinforcement for reinforcing a container 500 which includes the first fluid passage 305 and the second fluid passage 405. As explained above, referring to Fig. 2, the first side end portion 204 of the intermediate plate member 200 forms the first protruding portion 204p. The second side end portion 206 of the intermediate plate member 200 forms the second protruding portion 206p. Thus, effectively using the first protruding portion 204p and the second protruding portion 206p of the intermediate plate member 200 which protrude outwardly from the first fluid passage forming member 300 and the second fluid passage forming member 400, the joining portion 701 and the joining portion 702 can be readily formed at an outside of the intermediate plate member 200.

As shown in Fig. 1, a first closing plate 600 which includes the inlet port 601 is joined to a first end portion (upper end in Fig. 1) of the intermediate plate member 200 and the first fluid passage forming member 300 in a longitudinal direction (a lengthwise direction) by means of a joining portion 703 to be sealed, thus closing a starting end (an end) of the first fluid passage 305 in the longitudinal direction. Another first closing plate 600 which includes the outlet port 602 is joined to a first end portion (upper end in Fig. 1) of the intermediate plate member 200 and the second fluid passage forming member 400 in the longitudinal direction by means of a joining portion 704 to be sealed, thus closing a terminal end (an end) of the second fluid passage 405 in the longitudinal direction. As shown in Fig. 1, a second closing plate 650 serving as a bottom plate is joined to a second end of the intermediate plate member 200 and the second fluid passage forming member 400 in the longitudinal direction by means of a joining portion 705 to be sealed, thus closing a terminal end of the first fluid passage 305 and the starting end of the second fluid passage 405. Thus, the container 500, which forms a desulfurizer in an approximately box shape, is formed.

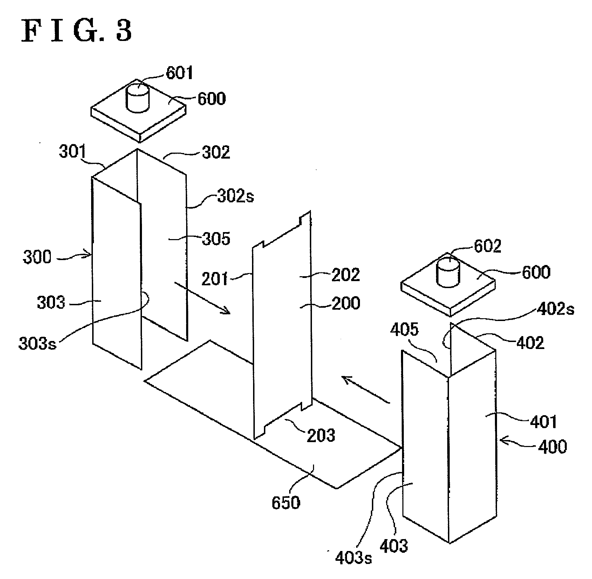

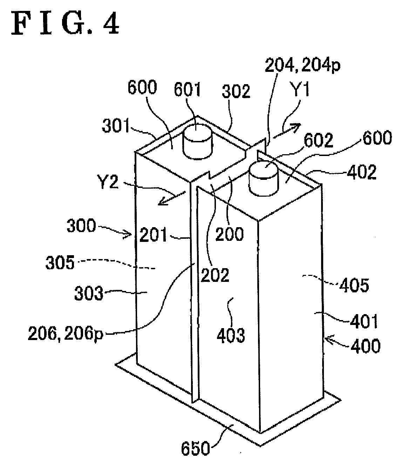

As shown in Fig. 1, the terminal end of the first fluid passage 305 and the starting end of the second fluid passage 405 is in communication with each other via the opening 203. As shown in Fig. 2, the first end wall 302 of the first fluid passage forming member 300 and the first opposing wall 303 are joined to the first surface 201 of the intermediate plate member 200 by means of the joining portions 701 to be sealed. The second end wall 402 of the second fluid passage forming member 400 and the second opposing wall 403 are joined to the second surface 202 of the intermediate plate member 200 by means of the joining portion 702 to be sealed. The joining portion 701 and the joining portion 702 are exposed outwardly. According to the foregoing construction, because joining states of the joining portion 701 and the joining portion 702 are readily visible from the outside when inspecting by an inspector, there is no need for a flaw detection test or it is sufficient to have a simple flaw detection test, thus sealing maintenance at the joining portions 701, 702 is assumed to be easy and a reliability of the joining can be enhanced. Accordingly, a leakage of the fuel in a gas form between the first fluid passage 305 and the second fluid passage 405 via clearance formed due to faulty sealing is restrained. In consequence, it is restrained that the fuel flows to a downstream with inadequate desulfurization. In those circumstances, the joining portions 701, 702 may be formed with a welding portion or a brazing portion. According to the embodiment, as shown in Figs. 3 and 4, in a manufacturing process, the first fluid passage forming member 300 and the second fluid passage forming member 400 are arranged opposing each other via the intermediate plate member 200 and are sealed at the joining portion 701 and the joining portion 702 to be sealed. Thus, while ensuring a high sealing performance, the container 500 serving as the desulfurizer is readily assembled. Because the container 500 serving as the desulfurizer is readily assembled, faulty sealing of the joining portions 701, 702 can be restrained. Thus, the desulfurizer having high sealing performance can be attained.

Further, according to the construction of the embodiment, the first closing plate 600 including the inlet port 601 is joined to the first fluid passage member 300 and the intermediate plate member 200 by the joining portion 703 to be sealed. The first closing plate 600 including the outlet port 602 forms a bottom plate and is joined to the second fluid passage forming member 400 and the intermediate plate member 200 by the joining portion 704. The second closing plate 650 is joined to the end portion of the first fluid passage forming member 300 and the second fluid passage forming member 400 by the joining portion 705 to be sealed. The joining portion 703, the joining portion 704, and the joining portion 705 may be formed with a welding portion or a brazing portion likewise the joining portion 701 an the joining portion 702 shown in Fig. 2.

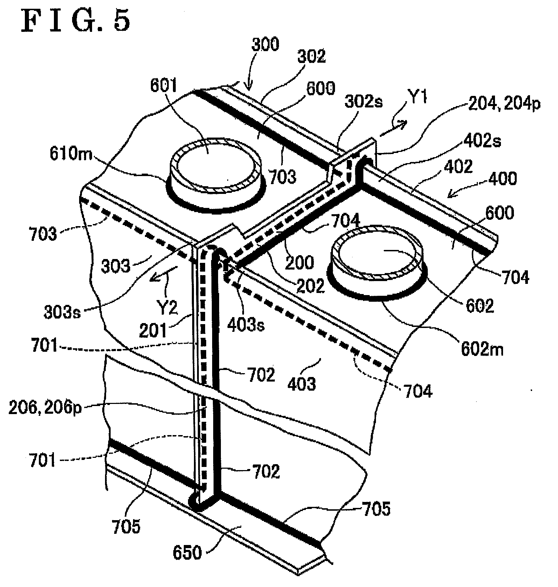

According to the construction of the embodiment, as shown in Fig. 5, because the joining portions 703, 704, 705 are exposed to the outside in addition to the joining portions 701, 702, joining states of the joining portions 703, 704, 705 are readily visible from the outside when inspecting, there is no need for a flaw detection test or it is sufficient to have a simple flaw detection test, thus a reliability of the joining of the joining portions 703, 704, 705 can be enhanced. For example, each of the joining portions may be inspected by naked eye (unaided eye). Alternatively, by flowing the fluid in a state where, for example, a coating by soap water is applied to the joining portions, the visual inspection can be readily performed because the coating by soap water Is deformed (e.g., inflated) by the leakage. As shown in Fig. 5, the inlet port 601 Is joined to the first closing plate 500 by a joining portion 601m to be sealed. The outlet port 602 is joined to the first closing plate 600 by a joining portion 602m to be sealed. Because the joining portions 601m, 602m are visible from the outside, a maintenance of the sealing is assumed to be easy.

In a case where the container 500 is used as the desulfurizer, as shown in Fig. 1, a desulfurization agent 520, for example, zeolite or activated carbon, serving as a depurant is contained in the first fluid passage 305 and the second fluid passage 405 of the container 500. During the operation of the fuel cell system, as shown in Fig. 1, the gas-formed fuel is introduced from the Inlet port 601 to the first fluid passage 305 along the arrowed direction X1, and proceeds in the first fluid passage 305 in the arrowed direction X2. The odorant of sulfur system included in the fuel is purified by the desulfurization agent 520 in the first fluid passage 305. Thereafter, the flowing direction of the fuel changes in a U-shape at the opening 203 of the intermediate plate member 200 to flow from the first fluid passage 305 to the second fluid passage 405 in the arrowed direction X3, further, the gas-state fuel flows in the second fluid passage 405 in the arrowed direction X4, is purified by the desulfurization agent in the second fluid passage 405, and is outputted to the reformer provided outside the container 500 via the outlet port 602. In those circumstances, because the flowing direction of the fuel changes in the U-shape at the opening 203, a length (distance) used for desulfurization is ensured while downsizing the desulfurizer, which enhances the reliability in the desulfurization performance.

As described above, the desulfurization agent 520 for purifying the fuel by removing the sulfur component, which serves as the depurative, is contained in the first fluid passage 305 and the second fluid passage 405. As shown in Fig. 1, a first retaining member 801 and a second retaining member 802 which restrain the floating movement of the desulfurization agent are positioned in an excessive room (excessive space) in the first fluid passage 305 closer to the inlet port 601 and in an excessive room in the second fluid passage 405 closer to the outlet port 602, respectively. The first and second retaining members 801, 802 include holes 801m, 802m through which the gas-state fuel flows. The retaining members 801, 802 restrain the floating movement of the desulfurization agent 520 due to the oscillation and vibration, thus restraining the desulfurization agent 520 from being damaged and being in a fine powdered form. Considering manufacturing costs, the first and second retaining members 801, 802 may be, for example, formed with a fibrous woven or nonwoven gas permeable material. Because those materials are light and flexible, those materials are likely to absorb the oscillation and/or impact applied to the desulfurization agent 520 when delivering and/or using the container 500 and/or the fuel cell system provided with the container 500. The fibrous woven or nonwoven gas permeable material is unsystematically (irregularly) gathered to be contained in the desulfurizer. Thus, the holes 801m, 802m are directed towards irregular various directions to enhance diffusion of the fuel gas, thus being advantageous to prevent the biased flow of the fuel in the passage 305, 405 and enhancing the use efficiency of the desulfurization agent 520. According to the embodiment explained above, the foregoing constructions are applied to the desulfurizer, however, the foregoing constructions are applicable to a water purifier. The first closing plate 600 provided at the second fluid passage forming member 400 serves as a second closing plate.

A second embodiment will be explained with reference to illustrations of drawing figures as follows. The construction of the depurant container device and the fuel cell system including the depurant container device is basically the same with that of the first embodiment as shown in Figs. 1-5, and the same effects and advantages are attained. As shown in Fig. 1, the first fluid passage 305 is connected to the inlet port 601 and the second fluid passage 405 is connected to the outlet port 602. A dimension (size) of the hole 802m of the second retaining member 802 positioned at the terminal end of the second fluid passage 405 closer to the outlet port 602 is smaller than a dimension (size) of the hole 801 m of the first retaining member 801 positioned at the start end of the first fluid passage 305 closer to the inlet port 601. In those circumstances, even if the desulfurization agent becomes at least partially a fine powdered form by secular change and/or impacts during the delivery, hole 802m of the second retaining member 802 provided closer to the outlet port 602 and formed with relatively small size restrains the desulfurization agent 520 which is in the fine powdered form from moving to the downstream therefrom. Thus, drawbacks, for example, clogging of depurant which is in a fine powder form at the downstream of the desulfurizer is restrained. Further, because the dimension (size) of the hole 801m of the first retaining member 801 positioned closer to the inlet port 601 is relatively greater compared to the second retaining member 802, the airflow resistance when introducing the gas-state fuel is reduced. According to the embodiment explained above, the foregoing constructions are applied to the desulfurizer, however, the foregoing constructions are applicable to a water purifier.

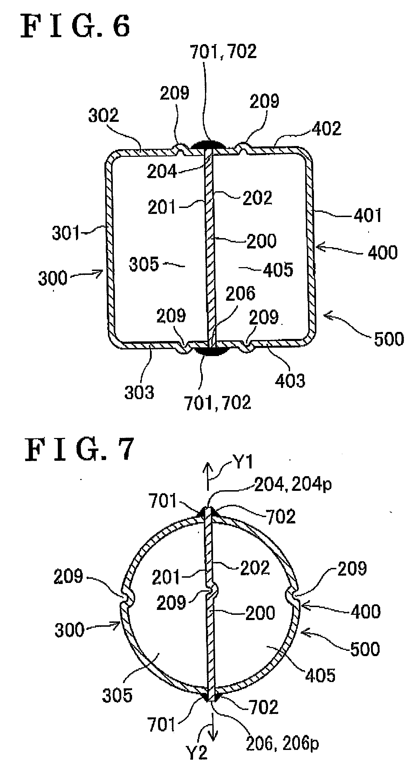

A third embodiment will be explained as follows referring to Fig. 6. Basically, the construction of the third embodiment Is the same to that of the first embodiment, and the same effects and advantages to the first embodiment are attained. As shown in Fig. 6, the first side end portion 204 of the intermediate plate member 200 does not protrude relative to the second end wall 402 of the second fluid passage forming member 400 and the first end wall 302 of the first fluid passage forming member 300 when viewing in a cross-section cut along a direction orthogonal to the fuel flow direction. The second side end portion 206 of the intermediate plate member 200 does not protrude relative to the first opposing wall 303 of the first fluid passage forming member 300 and the second opposing wall 403 of the second fluid passage forming member 400. According to the construction of the third embodiment, the joining portion 701 and the joining portion 702 are outwardly exposed. Thus, because the joining state of the joining portion 701 and the joining portion 702 is readily visible from the outside when inspecting, there is no need for a flaw detection test or it is sufficient to have a simple flaw detection test, thus sealing maintenance at the joining portions 701, 702 is assumed to be easy and a reliability of the joining can be enhanced. Further, because the joining portion 703, the joining portion 704, and the joining portion 705 are exposed to the outside, the joining state of the joining portion 703, the joining portion 704, and the joining portion 705 is readily visible when inspecting by an inspector from the outside. The first fluid passage forming member 300 and the second fluid passage forming member 400 include wave formed portions 209. The wave formed portions 209 contribute to absorb distortions deriving from the welding and brazing, thus enhancing the protective performance of the joining portion 701 and the joining portion 702. The wave formed portions 209 may be provided at positions closer to the joining portions 701, 702. Further, the wave formed portions 209, may be formed to be, equal to or less than 20 times a thickness of or equal to or less than 10 times a thickness of, for example, the average thickness of the intermediate plate member 200. According to the embodiment explained above, the foregoing constructions are applied to the desulfurizer, however, the foregoing constructions are applicable to a water purifier.

A fourth embodiment will be explained with reference to Fig. 7. Basically, the construction of the fourth embodiment is the same to that of the first embodiment, and the same effects and advantages to the first embodiment are attained. Fig. 7 shows a cross-sectional view which is cut along a direction orthogonal to a fuel flow direction. As shown in Fig. 7, the first fluid passage forming member 300 includes an approximately C-shaped cross section and the second fluid passage forming member 400 includes an approximately inverted-C-shaped cross section. The first side end portion 204 of the intermediate plate member 200 protrudes outwardly from the first fluid passage forming member 300 and the second fluid passage forming member 400 in the arrowed direction Y1. The second side end portion 206 of the intermediate plate member 200 protrudes outwardly from the first fluid passage forming member 300 and the second fluid passage forming member 400 in the arrowed direction Y2. According to the construction of the embodiment, the joining portion 701 and the joining portion 702 seal the intermediate plate 201, the first fluid passage forming member 300 and the second fluid passage forming member 400 while being exposed to the outside. Thus, because the joining state of the joining portion 701 and the joining portion 702 is readily visible from the outside when inspecting, a reliability of the joining of the joining portion 701 and the joining portion 702 can be enhanced. Accordingly, a leakage of the fuel between the first fluid passage 305 and the second fluid passage 405 via clearance formed due to faulty sealing is restrained. Further, because other joining portions (i.e., the joining portion 703, the joining portion 704, and the joining portion 705) are exposed to the outside, the joining state of the joining portion 703, the joining portion 704, and the joining portion 705 is readily visible when inspecting from the outside. The intermediate plate member 200, the first fluid passage forming member 300 and the second fluid passage forming member 400 include the wave formed portions 209. The wave formed portions 209 contribute to absorb distortions deriving from the welding and brazing, thus enhancing the sealing performance of the joining portion 701 and the joining portion 702. According to the embodiment explained above, the foregoing constructions are applied to the desulfurizer, however, the foregoing constructions are applicable to a water purifier.

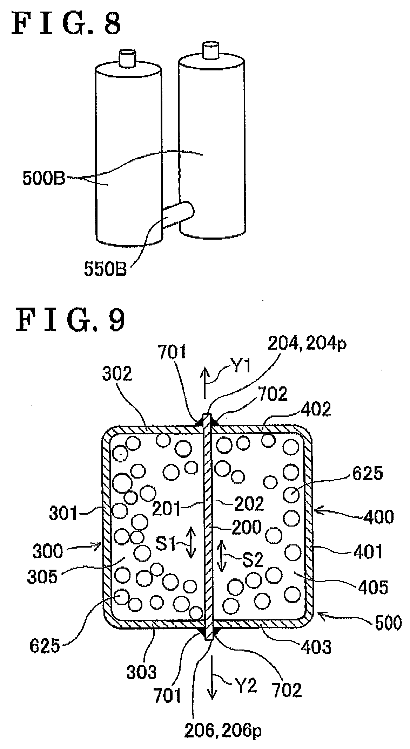

A construction of a comparison example will be explained with reference to Fig. 8. As shown in Fig. 8, according to a known construction, in case of increasing a size of the desulfurizer, while loading the desulfurization agent in plural accommodation containers 500B which are independent from one another, end portions of the accommodation containers 500B are communicated via a communication pipe 550B in order to changing a flowing direction of the gas-formed fuel in a U-shape. According to the known construction, manufacturing costs are increased.

A fifth embodiment will be explained with reference to Fig. 9. Basically, the construction of the fifth embodiment is the same to that of the first embodiment, and the same effects and advantages to the first embodiment are attained. In those circumstances, the fifth embodiment is applied to a water purifier for purifying the water for reforming. Fig. 9 shows a cross section which is cut along a direction orthogonal to a water flow direction (i.e., the water serving as a fluid). As shown in Fig. 9, similar to the construction according to the first embodiment, the first end wall 302 and the first opposing wall 303 of the first fluid passage forming member 300 are attached to the first surface 201 of the intermediate plate member 200 to be joined and sealed by the joining portion 701. The second end wall 402 and the second opposing wall 403 of the second fluid passage forming member 400 are attached to the second surface 202 of the intermediate plate member 200 to be joined and sealed by the joining portion 702. Because the joining portions 701 and 702 are outwardly exposed and the visual inspection is assumed to be easy, sealing maintenance at the joining portions 701, 702 is assumed to be easy. Thus, a leakage of the water between the first fluid passage 305 and the second fluid passage 405 via clearance formed due to faulty sealing is restrained. In consequence, it is restrained that the water with inadequate purification flows to a downstream. In those circumstances, the intermediate plate member 200 serves as reinforcement for reinforcing the container 500 which includes the first fluid passage 305 and the second fluid passage 405. As explained above, referring to Fig. 9, the first side end portion 204 of the intermediate plate member 200 forms the first protruding portion 204p which protrudes outwardly (i.e., the arrowed direction Y1). The second side end portion 206 of the intermediate plate member 200 forms the second protruding portion 206p which protrudes outwardly (i.e., the arrowed direction Y2). Thus, effectively using the first protruding portion 204p and the second protruding portion 206p of the intermediate plate member 200 which protrude outwardly from the first fluid passage forming member 300 and the second fluid passage forming member 400, the joining portion 701 and the joining portion 702 can be readily formed at an outside of the intermediate plate member 200. A water purification agent 625, serving as the depurant, which includes an ion-exchange resin is contained. According to the embodiment explained above, the foregoing constructions are applied to the water purifier, however, the foregoing constructions are applicable to a desulfurizer.

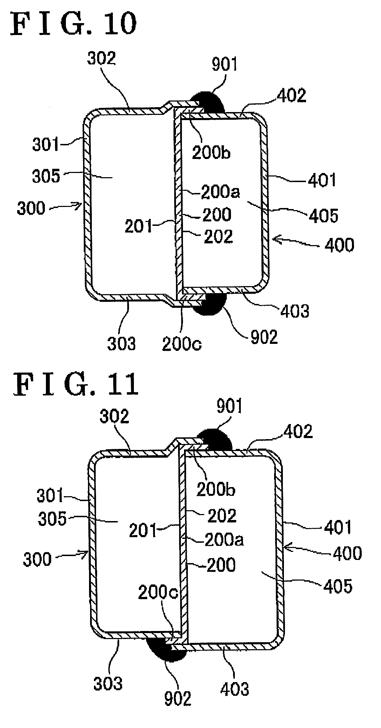

A sixth embodiment will be explained with reference to Fig. 10. Basically, the construction of the sixth embodiment is the same to that of the first embodiment, and the same effects and advantages to the first embodiment are attained. As shown in Fig. 10, the intermediate plate member 200 includes a main body 200a and end portions 200b, 200c bent in a common direction, and is shaped in an approximately U-shape. As shown in Fig. 10, the first end wall 302 and the first opposing wall 303 of the first fluid passage forming member 300 are joined to the end portions 200b, 200c while covering outer sides of the end portions 200b, 200c by a joining portion 901, 902 to be sealed. Because the joining portion 901 and a joining portion 902 are exposed to the outside, the visual inspection and sealing maintenance at the joining portions 901, 902 is assumed to be easy. Accordingly, a leakage of the fuel in a gas form between the first fluid passage 305 and the second fluid passage 405 via clearance formed due to faulty sealing is restrained. The second end wall 402 and the second opposing wall 403 of the second fluid passage forming member 400 are joined to the end portions 200b, 200c while covering inner sides of the end portions 200b, 200c by the joining portion 901, 902 to be sealed. Because the joining portion 901, 902 is visible from the outside, whether the joining portion is appropriately provided can be readily visually inspected (examined). According to the embodiment explained above, the foregoing constructions are applied to the desulfurizer, however, the foregoing constructions are applicable to a water purifier.

A seventh embodiment will be explained with reference to Fig. 11. Basically, the construction of the seventh embodiment is the same to that of the first embodiment, and the same effects and advantages to the first embodiment are attained. As shown in Fig. 11, the intermediate plate member 200 includes the main body 200a and the end portions 200b, 200c which are bent in opposing directions from each other. As shown in Fig. 11, the first end wall 302 of the first fluid passage forming member 300 covers an outer side of the end portion 200b and the second end wall 402 of the second fluid passage forming member 400 is attached to an inner side of the end portion 200b, thus the first end wall 302 of the first fluid passage forming member 300, the second end wall 402 of the second fluid passage forming member 400, and the end portion 200b of the intermediate plate member 200 are joined by the joining portion 901 to be sealed. Further, the first opposing wall 303 of the first fluid passage forming member 300 is attached to an inner side of the end portion 200c of the intermediate plate member 200, the second opposing wall 403 of the second fluid passage forming member 400 covers an outer side of the end portion 200c, thus the first opposing wall 303, the second opposing wall 403, and the end portion 200c of the intermediate plate member 200 are joined by the joining portion 902 to be sealed. As shown in Fig. 11, because the joining portions 901, 902 are exposed to the outside, the visual inspection and sealing maintenance at the joining portions 901, 902 is assumed to be easy. Accordingly, a leakage of the fuel in a gas form between the first fluid passage 306 and the second fluid passage 405 via clearance formed due to faulty sealing is restrained. According to the embodiment explained above, the foregoing constructions are applied to the desulfurizer, however, the foregoing constructions are applicable to a water purifier.

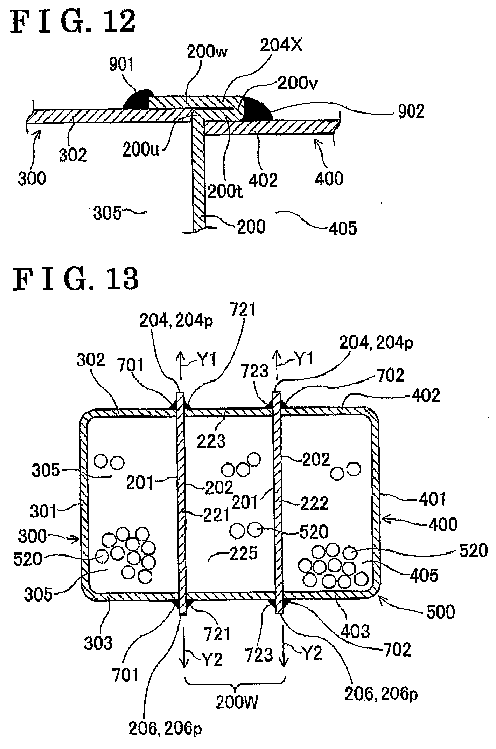

An eighth embodiment will be explained with reference to Fig. 12. Basically, the construction of the eighth embodiment is the same to that of the first embodiment, and the same effects and advantages to the first embodiment are attained. Fig. 12 shows a cross-section which is cut along a direction orthogonal to the fuel flow direction. As shown in Fig. 12, a first side end portion 204X of the intermediate plate member 200 is bent approximately in a T-shape and includes a bent portion 200u which is formed by bending a side portion 200t in an L-shape, and a bent portion 200v which is formed by bending a side portion 200w in a substantially U-shape. The first end wall 302 of the first fluid passage forming member 300 is fitted to and joined to an inner side surface of the first side end portion 204X (the side portion 200w) by the joining portion 901 to be sealed. The second end wall 402 of the second fluid passage forming member 400 is fitted to and joined to an inner side surface of the first end portion 204X (the side portion 200t) by the joining portion 902 to be sealed. As shown in Fig. 12, because the joining portions 901, 902 are visible from the outside, whether the joining portion is appropriately formed can be readily visually inspected (examined). Accordingly, a leakage of the fuel in a gas form between the first fluid passage 305 and the second fluid passage 405 via clearance formed due to faulty sealing is restrained. A second side end portion of the intermediate plate member 200 is formed in approximately T-shape similar to the first side end portion 204X. According to the embodiment explained above, the foregoing constructions are applied to the desulfurizer, however, the foregoing constructions are applicable to a water purifier.

A ninth embodiment will be explained with reference to Fig. 13. Basically, the construction of the ninth embodiment is the same to that of the first embodiment, and the same effects and advantages to the first embodiment are attained. Fig. 13 shows a cross-section which is cut along a direction orthogonal to the fuel flow direction. As shown in Fig. 13, the first fluid passage forming member 300 and the second fluid passage forming member 400 are each formed in an approximately U-shape in cross-section. An intermediate plate member 200W includes a first intermediate plate 221 and a second intermediate plate 222 which are arranged in parallel to each other, and a frame-shaped passage forming member 223 which is positioned between the first intermediate plate 221 and the second intermediate plate 222 and forms an intermediate passage 225. The first side end portions 204 of the first intermediate plate 221 and the second intermediate plate 222 are protruded from the passage forming members 300, 400 outwardly (i.e., in the arrowed direction Y1). The second side end portions 206 of the intermediate plate member 200W protrude from the passage forming member 300, 400 outwardly (i.e., in the arrowed direction Y2). According to the ninth embodiment, the joining portion 701 and the joining portion 702 are exposed to the outside. Thus, because the joining state of the joining portion 701 and the joining portion 702 is readily visible when Inspecting (by the inspector) from the outside, a reliability of the joining of the joining portion 701 and the joining portion 702 can be enhanced. As shown in Fig. 13, the first intermediate plate 221 and the passage forming member 223 are joined by joining portions 721 to be sealed. The second intermediate plate 222 and the passage forming member 223 are joined by joining portions 723 to be sealed. The joining portions 721, 723 and other joining portions are exposed to the outside, and the joining states of the joining portions are readily visible from the outside by an inspector and thus sealing maintenance is assumed to be easy. An opening is formed at each of the first intermediate plate 221 and the second intermediate plate 222 at positions opposing each other (at opposite positions). Thus, the fuel flows in the same direction in the first fluid passage 305 and the second fluid passage 405. In the intermediate passage 225, the fuel flows in a reversal direction from the fuel flow direction in the first fluid passage 305 and the second fluid passage 405. According to the embodiment explained above, the foregoing constructions are applied to the desulfurizer, however, the foregoing constructions are applicable to a water purifier.

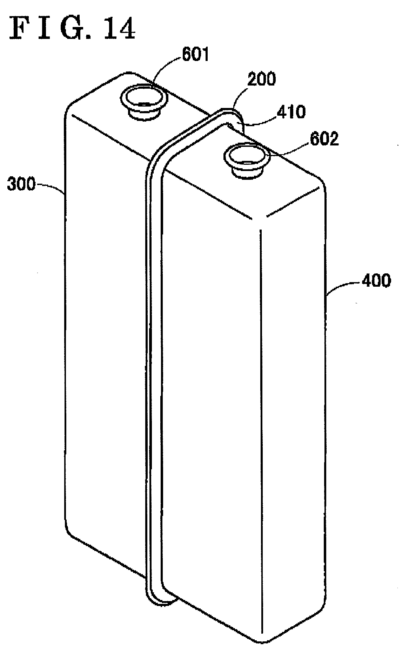

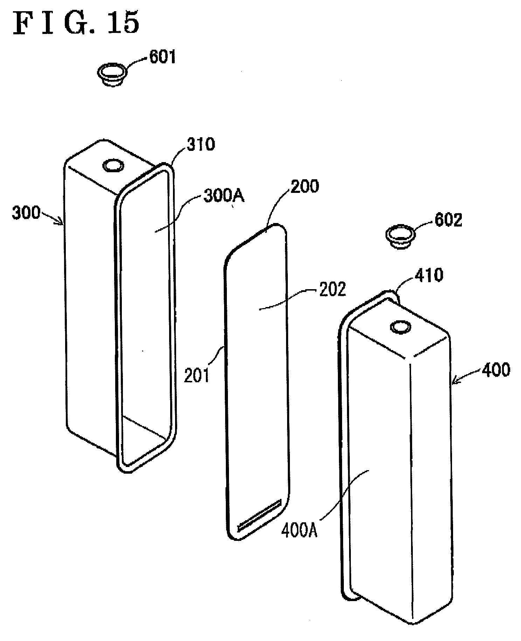

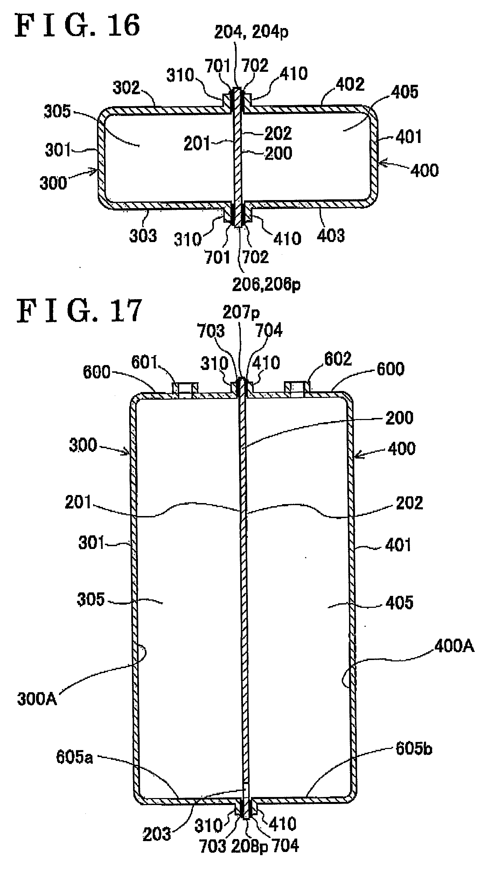

A tenth embodiment will be explained with reference to Figs. 14 to 17. Basically, the construction of the tenth embodiment is the same to that of the first embodiment, and the same effects and advantages to the first embodiment are attained. As shown in Figs. 14-17, the first fluid passage forming member 300 includes a recessed portion 300A and a flange portion (a rim portion) 310. The recessed portion 300A of the first fluid passage forming member 300 is defined by the first intermediate wall 301, the first end wall 302, the first opposing wall 303, the first closing plate 600, and the second closing plate 650 at the first fluid passage 308 side as shown in Fig. 3 of the first embodiment. The flange portion 310 is extended outwardly from an entire rim portion of the recessed portion 300A to be arranged along the intermediate member 200. More particularly, the flange portion 310 is formed to extend outwardly from an end of the first end wall 302 (i.e., an end portion of the side portion 302s), an end of the first opposing wall 303 (i.e., an end of the side portion 303s), an end of the first closing plate 600, which are shown in Fig. 5, and an end of the bottom portion 605a shown in Fig. 17 so that the flange portion 310 extends along the intermediate plate member 200. According to the embodiment, the flange portion 310 is formed to be in parallel with the first surface 201 of the intermediate plate member 200.

The second fluid passage forming member 400 includes a structure similar to the first fluid passage forming member 300. The second fluid passage forming member 400 includes a recessed portion 400A and a flange portion 410. The recessed portion 400A is defined by the second intermediate wall 401, the second end wall 402, the second opposing wall 403, the first closing plate 600, and the second closing plate 650 at the second fluid passage 405 side, as shown in Fig. 3 of the first embodiment. The flange portion 410 is extended outwardly from a rim portion of the recessed portion 400A to be arranged along the intermediate member 200. According to the embodiment, the flange portion 410 is formed to be in parallel to the second surface 202 of the intermediate plate member 200. The first fluid passage forming member 300 and the second fluid passage forming member 400 are formed, for example, by a deep drawn stamping.

As shown in Figs. 16 and 17, the flange portion 310 of the first fluid passage forming member 300 is attached to be seated on the first surface 201 of the intermediate member 200 and joined to the intermediate member 200 by the joining portions 701, 703 to be sealed. The flange portion 410 of the second fluid passage forming member 400 is attached to be seated on the second surface 202 of the intermediate plate member 200 and joined to the intermediate plate by the joining portions 702, 704 to be sealed. The intermediate member 200 includes the first protruding portion 204p, the second protruding portion 206p, a third protruding portion 207p at the first closing plate 600 side, and a fourth protruding portion 208p at the second closing plate 650 side, which protrude outwardly from the first fluid passage forming member 300 and the second fluid passage forming member 400. Thus, the joining portions 701-704 can be readily formed at the intermediate member 200.

According to the embodiment, because the flange portions 310, 410 are formed at the first and second fluid passage forming members 300, 400, respectively, a contact dimension (contact area) of the flange portions 310, 410 and the first and second fluid passage forming members 300, 400 relative to the joining portions 701-704 is increased. By increasing the contact area of the joining portions 701-704 relative to the flange portions 310,410 and the first and second fluid passage forming members 300, 400, sealing performance Is further stabilized. For example, even if the size of the depurant container (e.g., desulfurizer, water purifier) is increased, a high sealing performance can be ensured according to the construction of the embodiment. Further, because of an increase of the contact area of the joining portions 701-704 relative to the flange portions 310, 410 and the first and second fluid passage forming members 300, 400, the first and second fluid passage forming members 300, 400 can be readily and stably assembled to the intermediate member 200. That is, according to the embodiment, a workability of the assembling process is enhanced. Further, by arranging the flange portions 310, 410 to be in parallel to the intermediate member 200, a shakiness when assembling is prevented and thus enhancing a stability of the member during the assembling process and a stability of the sealing after joining the flange portions 310, 410 to the intermediate member 200.

The first and second fluid passage forming members 300, 400 which are formed by stamping without using joining portions include bent portions at the flange portions 310, 410. Namely, a bent portion which is formed by bending a plate member is formed at each rim portion of the recessed portion 300A and the recessed portion 400A. According to the foregoing construction, a rigidity of the first and second fluid passage forming members 300, 400 is enhanced, and thus enhancing a rigidity of the depurant container. Further, because the joining portions 701-704 are exposed to the outside, the advantages similar to other embodiments can be attained. The joining portions 701-704 may be formed by welding or brazing. According to the construction of the embodiment, joining portions are not required for manufacturing the first and second fluid passage forming members 300, 400 and the first and second fluid passage forming members 300, 400 are manufactured by stamping, thus enhancing the manufacturing efficiencies.

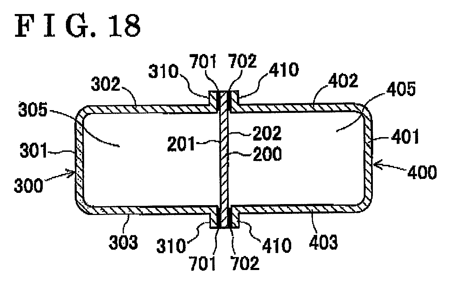

Accordingly, the depurant container device for fuel cell system excels in the stability of the sealing, the rigidity, a cost performance when a size of the device is increased, and manufacturing efficiencies. Alternatively, as shown in Fig. 18, the intermediate member 200 may not include protruding portions. Further, alternatively, the joining portions 701-704 may be formed not to be exposed to the outside.

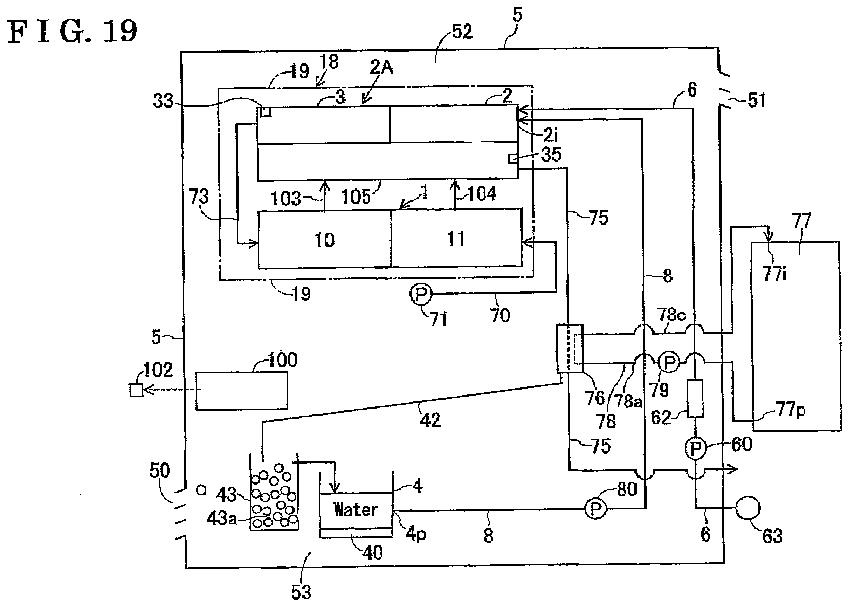

Fig. 19 shows a first construction in which the desulfurizer and the water purifier of the embodiments are applied. The desulfurizer according to the embodiments is applied as a desulfurizer 62. The water purifier according to the embodiments is applied as a water purifier 43. As shown in Fig. 19, the fuel cell system includes an evaporating portion 2 producing vapor by vaporizing the liquid-phase water, a reforming portion 3 forming anode fluid by reforming the fuel using the vapor produced at the evaporating portion 2, a tank 4 for reserving the liquid-phase water to be supplied to the evaporating portion 2, and a case 5 housing components including the evaporating portion 2, the reforming portion 3, and the tank 4. A fuel cell 1 includes an anode 10 and a cathode 11 which sandwich an ion conductor therebetween. For example, a solid oxide fuel cell (SOFC) which is operated at a temperature, for example, equal to or greater than 400 degrees Celsius, may be applied to the fuel cell 1. An anode exhaust gas exhausted from the anode 10 is supplied to a combusting portion 105 via an anode gas exhaust passage 103. A cathode exhaust gas exhausted from the cathode 11 is supplied to the combusting portion 105 via a cathode gas exhaust passage 104. The combusting portion 105 combusts the anode exhaust gas and the cathode exhaust gas to heat the evaporating portion 2 and the reforming portion 3. The combusting portion 105 is provided with a combustion exhaust gas passage 75, and the combustion exhaust gas including the gas after combusted in the combusting portion 105 and the gas being not combusted is released to the atmosphere via the combustion exhaust gas passage 75. The reforming portion 3 is formed by supporting a reforming catalyst onto a carrier, for example, ceramics, and is provided adjacent to the evaporating portion 2. The reforming portion 3 and the evaporating portion 2 structures a reformer 2A, and are surrounded by a thermal insulation wall 19 together with the fuel cell 1 to form an electric power generating module 18. A thermal sensor 33 detecting the temperature at the reforming portion 3 is provided inside the reforming portion 3. An ignition portion 35 serving as a heater for igniting the fuel is provided inside the combusting portion 105. Any construction is applicable as the ignition portion 35 as long as igniting the fuel in the reforming portion 3. A signal from the thermal sensor 33 is inputted into a control portion (controller) 100. The control portion 100 operates the ignition portion 35 to ignite and combust the gas in the combustion portion 105 to increase the temperature. In case of an abnormality, the control portion 100 transmits an alarm signal to an alarm system 102.

During the power generating operation, the reformer 2A is heated in the thermal insulation wall 19 to be appropriate for a reforming reaction. During the power generating operation, the evaporating portion 2 is heated to heat the water, thus producing the vapor. In a case where the solid oxide fuel cell (SOFC) is applied as the fuel cell 1, because the anode 10 and the cathode 11 of the fuel cell 1 are heated by combusting the anode fluid or the fuel at the anode 10, the reforming portion 3 and the evaporating portion 2 are simultaneously heated. A fuel passage 6, which includes a fuel pump 60 and the desulfurizer 62, is configured to supply the fuel from a fuel source 63 to the reformer 2A. A cathode fluid passage 70 is connected to the cathode 11 of the fuel cell 1 for supplying the cathode fluid (air) to the cathode 11. The cathode fluid passage 70 is provided with a cathode pump 71 serving as a water conveying source for carrying the cathode fluid.

As shown in Fig. 19, the case 5 includes an inlet port 50 and an outlet port 51 which are in communication with the atmosphere outside the case 5. Further, the case 5 includes an upper chamber space 52 serving as a first chamber and a lower chamber space 53 serving as a second chamber. The fuel cell 1 is housed in the upper side of the case 5, that is, in the upper chamber space 52 together with the reforming portion 3 and the evaporating portion 2. The tank 4 reserving the liquid-phase water to be reformed in the reforming portion 3 is housed in the lower chamber space 53 of the case 5. A heating portion 40 serving as a heater, for example, an electric heater, is provided at the tank 4. The heating portion 40 is configured to heat the water reserved in the tank 4, and is formed with, for example, an electric heater. For example, when the environmental temperature, for example, the outside air temperature is lower, the water reserved in the tank 4 is heated to be equal to or higher than a predetermined temperature (e.g., 5 degrees Celsius, 10 degrees Celsius, 20 degrees Celsius) on the basis of a command from the control portion 100 to restrain the water from freezing. As shown in Fig. 19, a water supply passage 8 which establishes the communication between an outlet port 4p of the tank 4 positioned at the lower chamber space 53 and an inlet port 2i positioned at the upper chamber space 52 is provided in the case 5 and serves as a pipe. As shown in Fig. 19, the water supply passage 8 is configured to supply the water reserved in the tank 4 to the evaporating portion 2 via the inlet port 2i. The water supply passage 8 is provided with a pump 80 serving as a water conveying source for carrying the water reserved in the tank 4 to the evaporating portion 2. The pump 80 is configured to operate In a normal mode in which the pump 80 is actuated to rotate in a normal direction to convey (carry) the water reserved in the tank 4 from the outlet port 4p to the inlet port 2i of the evaporating portion 2. The control portion 100 is provided for controlling the pump 80 via a drive circuit. The control portion 100 controls the pumps 71, 79, 60.

When the pump 80 is actuated during the fuel cell system is operated, the water reserved in the tank 4 is conveyed in the water supply passage 8 from the outlet port 4p of the tank 4 to the inlet port 2i of the evaporating portion 2 and is heated at the evaporating portion 2 to be the vapor. The vapor moves to the reforming portion 3 together with the fuel supplied from the fuel passage 6. In those circumstances, preferably, the fuel may be in a gas-phase, however, alternatively, the fuel may be in a liquid-phase. At the reforming portion 3, the fuel is reformed by means of the vaporized water to be the anode fluid (i.e., the gas including the hydrogen). The anode fluid is supplied to the anode 10 of the fuel cell 1 via an anode fluid passage 73. Further, the cathode fluid (i.e., the gas including the oxygen; the air in the case 5) is supplied to the cathode 11 of the fuel cell 1 via the cathode fluid passage 70: Thus, the fuel cell 1 generates the electricity. The exhaust gas with high temperature which is exhausted from the fuel cell 1 is exhausted to the outside of the case 5 via the combustion exhaust gas passage 75.

The combustion exhaust gas passage 75 is provided with a heat exchanger 76 including a condensing function. The heat exchanger 76 is provided with a passage 78 for reserved warm water which Is connected to a warm water reserving tank 77, and a pump 79 for reserved warm water is provided at the passage 78 for reserved warm water. The passage 78 for reserved warm water includes an outward passage 78a and a return passage 78c. The water in the warm water reserving tank 77 with low temperature is outputted from a outputting port 77p of the warm water reserving tank 77 by an actuation of the pump 79 for reserved warm water, flows through the outward passage 78a, and reaches the heat exchanger 76 to be heated by a heat exchanging operation of the heat exchanger 76. The water heated at the heat exchanger 76 returns to the warm water reserving tank 77 via a return port 77i by way of the return passage 78c. Thus, the water in the warm water reserving tank 77 is heated to be warm. The vaporized water included in the exhaust gas is condensed at the heat exchanger 76 to be the condensed water. The condensed water is supplied to the water purifier 43, for example, by the gravity via a condensed water passage 42 formed extending from the heat exchanger 76. The water purifier 43 includes a water purification agent 43a, for example, an ion exchange resin, which removes the impurities in the condensed water. The water removed with the impurities is moved to the tank 4 to be reserved therein. When the pump 80 is actuated in a normal mode, the water in the water tank 4 is supplied to the evaporating portion 2 with a high temperature via the water supply passage 8, is vaporized at the evaporating portion 2, is supplied to the reforming portion 3 as the vaporized water, and is consumed in a reforming reaction for reforming the fuel at the reforming portion 3. According to the embodiment, the leakage, or permeation of the fluid, for example, fuel or water, at the joining portion between the first fluid passage and the second fluid passage via the intermediate plate due to faulty sealing is restrained. Accordingly, the fuel can be sufficiently purified by the desulfurization agent. Further, the water can be sufficiently purified by the water purification agent. Thus, the output of the fuel or the water which is not sufficiently purified by the desulfurization agent or the water purification agent to a system provided at a downstream of the outlet port (e.g., a reformer, or a fuel cell) is restrained, and a reliability of the system in a long term is enhanced.

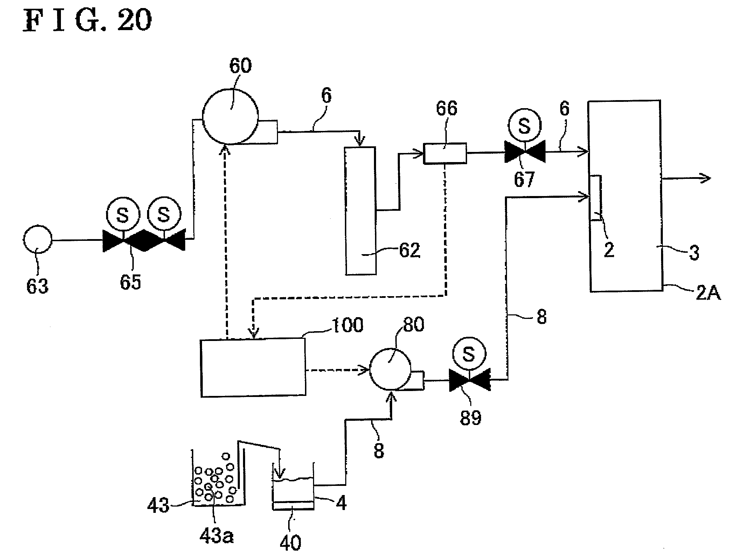

Fig. 20 shows a second construction in which the desulfurizer and the water purifier of the embodiments are applied. A basic construction of the second construction is similar to the first construction. The same reference numeral is applied, and a different construction will be explained as follows. As shown in Figs. 19 and 20, the fuel passage 6 directed to the reformer 2A from the fuel source 63 is provided. A double barrel type fuel valve 65, the fuel pump 60, the desulfurizer 62, a flow volume sensor 66, and an inlet valve 67 are arranged in series at the fuel passage 6. The water supply passage 8 directed to the evaporating portion 2 of the reformer 2A is provided. The water purifier 43 housing the water purification agent 43a, the tank 4 reserving the water purified in the water purifier 43, the pump 80 serving as a water conveying soruce, and an inlet valve 89 are provided at the water supply passage 8. The control portion 100 is configured to control the fuel pump 60, the inlet valves 67, 89, and the pump 80 via signal wires. The detected signal at the flow volume sensor 66 is inputted to the control portion 100.

The constructions of the depurant container device for the fuel cell system and the fuel cell system including the depurant container device are not limited to the embodiments and applied constructions explained above, and may be changed within a range which does not depart from the spirits of the scope of the invention. According to the first embodiment, the joining portion 701 and the joining portion 702 are formed using the first protruding portion 204p and the second protruding portion 206p of the intermediate plate member 200 which protrude outwardly from the first fluid passage forming member 300 and the second fluid passage forming member 400 as shown in Figs. 1 and 2. However, alternatively, the joining portion 701 and the joining portion 702 may be formed without the first protruding portion 204p and the second protruding portion 206p. The first and second retaining members 801, 802 are made of fibrous material, for example, fabric according to the embodiments. However, alternatively, a metal spring may be applied as the retaining members. According to the embodiment, the solid oxide fuel cell is applied as the fuel cell 1 as shown in Fig. 19. However, alternatively, a polymer electrolyte fuel cell, a phosphoric acid fuel cell (PAFC), and a molten-carbonate fuel cell (MCFC) may be applied as the fuel cell 1. Namely, as long as including a desulfurizer for desulfurizing the fuel, any fuel cell system is applicable. The types of fuel is not limited to, for example, town gas, propane gas, biogas, liquid petroleum gas (LPG), compressed natural gas (CNG), kerosene, gasoline, and alcohol are applicable.

The depurant container device is, for example, applied to a desulfurizer for removing the odorant of the fuel, or to a water purifier for purifying the water for reforming. When the depurant container is applied to the desulfurizer, the fluid corresponds to the fuel which includes the odorant, and the depurant, for example, corresponds to zeolite or activated carbon which include a desulfurizing function. When the depurant container is applied to the water purifier, the fluid corresponds to the water which is to be the vapor for vapor-reforming the fuel, and a water purification agent, for example, an ion-exchange resin is applied as the depurant. During the manufacturing process, the first fluid passage forming member which includes the first fluid passage is attached to the first surface of the intermediate member to be joined and sealed at the joining portion. The second fluid passage forming member which includes the second fluid passage is attached to the second surface of the intermediate plate to be joined and sealed at the joining portion. Thus, the depurant container device is readily assembled while ensuring high sealing performance. Because the assembling is readily performed, the faulty sealing of the joining portion can be restrained. In consequence, a depurant container device, for example, a desulfurizer or a water purifier, exhibiting high sealing performance is attained.

The fuel passage is configured to supply the fuel which is to be anode fluid to the reforming portion. The desulfurizer is provided at the fuel passage for purifying the fuel by removing the odorant included in the fuel. The reforming portion reforms the fuel from which the odorant is removed using the water vapor to form the anode fluid (i.e., generally, the fluid which includes hydrogen). The anode fluid is supplied to the fuel cell together with the cathode fluid to be used in an electricity generating operation. The fluid flowing into the purification chamber of the desulfurizer via an inlet port is purified by the purification agent stored in the purification chamber, and thereafter, outputted to a system provided at the downstream of the desulfurizer (e.g., reformer or fuel cell) via an outlet port. According to the foregoing construction, the desulfurizer can be readily assembled while ensuring the high sealing performance. Because the desulfurizer is readily assembled, the faulty sealing at the joining portion of the desulfurizer is restrained. Thus, the desulfurizer exhibiting high sealing performance is attained. Consequently, the fuel which is not sufficiently purified by the desulfurization agent is outputted to the system provided at the downstream (e.g., reformer or fuel cell) via the outlet port is prevented, and a reliability of the system in a long term is enhanced.

A depurant container device for a fuel cell system introducing a gas-phased or liquid-phased fluid, which is used at the fuel cell system and is to be depurated, via an inlet port and outputting the depurated fluid to an outside via an outlet port after flowing and changing a flowing direction in a U-shape therein, contains a purification agent for purifying a fluid in a first fluid passage and a second fluid passage, includes a retaining member including holes for passing the fluid, the retaining member provided in a room of the first fluid passage and/or the second fluid passage for restraining a floating movement of the depurant.

According to the depurant container device for the fuel cell system, the first fluid passage is connected to the inlet port, the second fluid passage is connected to the outlet port, and a size of the hole of the retaining member provided at the second fluid passage is smaller than a size of the hole of the retaining member provided at the first fluid passage.

## Claims

1. A depurant container device for a fuel cell system introducing a gas-phased or liquid-phased fluid, which is used at the fuel cell system and is to be depurated, via an inlet port (601) and outputting the depurated fluid to an outside the device via an outlet port (602) after flowing and changing a flowing direction in a U-shape therein, comprising:
an intermediate plate member (200) including a first surface and a second surface provided at opposite sides, and an opening for flowing the fluid in a U-shape between the inlet port and the outlet port;
a first fluid passage forming member (300) forming a first fluid passage (305) through which the fluid flows;
a second fluid forming member (400) forming a second fluid passage (405) which is in communication with the first fluid passage via the opening; wherein
the first fluid passage forming member contacts the first surface of the intermediate plate to be joined thereto by a joining portion (701, 702, 703, 704, 721, 723, 901, 902);
the second fluid passage forming member contacts the second surface of the intermediate plate to be joined thereto by the joining portion so that the depurant container device is sealed; and
a depurant is contained in the first fluid passage (305) and the second fluid passage (405);
**characterized in that**,
the joining portion (701, 702, 703, 704, 721, 723, 901, 902) is outwardly exposed.

2. The depurant container device for the fuel cell system according to claim 1, wherein
the first fluid passage forming member (300) and the second fluid passage forming member (400) are formed in a U-shape, a V-shape, or a C-shape in a cross section which is cut along a direction orthogonal to a flowing direction of the fluid from being introduced to the inlet port until reaching the opening.

3. The depurant container device for the fuel cell system according to either claim 1 or 2, wherein the joining portion (701, 702, 703, 704, 721, 723, 901, 902) is exposed outward at a/the cross section which is cut along a direction orthogonal to a flowing direction of the fluid from being introduced to the inlet port until turning at the opening.

4. The depurant container device for the fuel cell system according to any one of claims 1 to 3, further comprising:
a first closing plate (600) joined to a first end of the intermediate plate member (200), the first fluid passage forming member (300), and the second fluid passage forming member (400) in the flowing direction of the fluid for closing a first end of the first fluid passage (305) and the second fluid passage (405) in a longitudinal direction; and
a second closing plate (650) joined to a second end of the intermediate plate member (200), the first fluid passage forming member (300), and the second fluid passage forming member (400) in the flowing direction of the fluid for closing a second end of the first fluid passage (305) and the second fluid passage (405) in the longitudinal direction.

5. The depurant container device for the fuel cell system according to any one of claims 1 to 4, wherein a side end portion (204, 206) of the intermediate plate member (200) is exposed while protruding from the first fluid passage forming member (300) and the second fluid passage forming member (400) at a/the cross section which is cut along a direction orthogonal to a flowing direction of the fluid from being introduced to the inlet port until reaching the opening.

6. The depurant container device for the fuel cell system according to any one of claims 1 to 5, the depurant container device further comprising
a retaining member (801, 802) including holes (801m) for passing the fluid, the retaining member provided in an excessive space of the first fluid passage and/or the second fluid passage for restraining a floating movement of the depurant.

7. The depurant container device for the fuel cell system according to claim 6, wherein the first fluid passage (305) is connected to the inlet port (601), the second fluid passage (405) is connected to the outlet port (602), and a size of the hole (801m) of the retaining member (802) provided at the second fluid passage (405) is smaller than a size of the hole (801m) of the retaining member (801) provided at the first fluid passage (305).

8. A fuel cell system, comprising:
a fuel cell (1) to which an anode fluid and a cathode fluid are supplied for generating an electric power;
a reforming portion (3) forming the anode fluid by reforming a fuel using a water vapor;
a fuel passage (6) for supplying the fuel to be the anode fluid to the reforming portion;
a desulfurizer (62) provided at the fuel passage (6) for containing a desulfurization agent which purifies the fuel by removing an odorant included in a fuel as the depurant; wherein
the desulfurizer is constructed with the depurant container device for the fuel cell system according to any one of claims 1 to 7.

## Patentansprüche

1. Reinigerbehältervorrichtung für ein Brennstoffzellensystem, die ein Fluid in Gasphase oder Flüssigphase, das an dem Brennstoffzellensystem verwendet wird und zu reinigen ist, über einen Einlassanschluss (601) einleitet und das gereinigte Fluid, nach einem Strömen und Ändern der Strömungsrichtung in einer U-Form darin, an eine Außenseite der Vorrichtung über einen Austrittsanschluss (602) abgibt, wobei die Vorrichtung Folgendes aufweist:
ein Zwischenplattenbauteil (200), das eine erste Fläche und eine zweite Fläche, die an gegenüberliegenden Seiten vorgesehen sind, und eine Öffnung für ein Strömen des Fluides in einer U-Form zwischen dem Einlassanschluss und dem Austrittsanschluss umfasst;
ein erstes Fluiddurchgangausbildungsbauteil (300), das einen ersten Fluiddurchgang (305) ausbildet, durch den das Fluid strömt;
ein zweites Fluiddurchgangausbildungsbauteil (400), das einen zweiten Fluiddurchgang (405) ausbildet, der über die Öffnung mit dem ersten Fluiddurchgang in Verbindung steht; wobei
das erste Fluiddurchgangausbildungsbauteil die erste Fläche der Zwischenplatte berührt, um mit dieser durch einen Verbindungsabschnitt (701, 702, 703, 704, 721, 723, 901, 902) verbunden zu sein;
das zweite Fluiddurchgangausbildungsbauteil die zweite Fläche der Zwischenplatte berührt, um mit dieser durch den Verbindungsabschnitt verbunden zu sein, so dass der Reinigungsbehältervorrichtung abgedichtet ist; und
ein Reiniger in dem ersten Fluiddurchgang (305) und dem zweiten Fluiddurchgang (405) enthalten ist;
**dadurch gekennzeichnet, dass**
der Verbindungsabschnitt (701, 702, 703, 704, 721, 723, 901, 902) nach außen freiliegend ist.

2. Reinigerbehältervorrichtung für ein Brennstoffzellensystem gemäß Anspruch 1, wobei
das erste Fluiddurchgangausbildungsbauteil (300) und das zweite Fluiddurchgangausbildungsbauteil (400) in einer U-Form, einer V-Form oder einer C-Form in einem Querschnitt, der entlang einer zu einer Strömungsrichtung des Fluides vom Einleiten an dem Einlassanschluss bis zum Erreichen der Öffnung rechtwinkligen Richtung geschnitten ist, ausgebildet sind.

3. Reinigerbehältervorrichtung für ein Brennstoffzellensystem gemäß Anspruch 1 oder 2, wobei der Verbindungsabschnitt (701, 702, 703, 704, 721, 723, 901, 902) außen an einem/dem Querschnitt, der entlang einer zu einer Strömungsrichtung des Fluides vom Einleiten an dem Einlassanschluss bis zum Drehen an der Öffnung rechtwinkligen Richtung geschnitten ist, freiliegend ist.

4. Reinigerbehältervorrichtung für ein Brennstoffzellensystem gemäß einem der Ansprüche 1 bis 3, des Weiteren mit:
einer ersten Verschlussplatte (600), die mit einem ersten Ende des Zwischenplattenbauteils (200), des ersten Fluiddurchgangausbildungsbauteils (300) und des zweiten Fluiddurchgangausbildungsbauteils (400) in der Strömungsrichtung des Fluides verbunden ist, um ein erstes Ende des ersten Fluiddurchgangs (305) und des zweiten Fluiddurchgangs (405) in einer Längsrichtung zu verschließen; und
eine zweite Verschlussplatte (650) die mit einem zweiten Ende des Zwischenplattenbauteils (200), des ersten Fluiddurchgangausbildungsbauteils (300) und des zweiten Fluiddurchgangausbildungsbauteils (400) in der Strömungsrichtung des Fluides verbunden ist, um ein zweites Ende des ersten Fluiddurchgangs (305) und des zweiten Fluiddurchgangs (405) in einer Längsrichtung zu verschließen.

5. Reinigerbehältervorrichtung für ein Brennstoffzellensystem gemäß einem der Ansprüche 1 bis 4, wobei ein Seitenendabschnitt (204, 206) des Zwischenplattenbauteils (200) freiliegend ist, indem er von dem ersten Fluiddurchgangausbildungsbauteil (300) und dem zweiten Fluiddurchgangausbildungsbauteil (400) an einem/dem Querschnitt, der entlang einer zu einer Strömungsrichtung des Fluides vom Einleiten an dem Einlassanschluss bis zum Erreichen der Öffnung rechtwinkligen Richtung geschnitten ist, vorsteht.

6. Reinigerbehältervorrichtung für ein Brennstoffzellensystem gemäß einem der Ansprüche 1 bis 5, wobei die Reinigerbehältervorrichtung des Weiteren Folgendes aufweist:
ein Rückhaltebauteil (801, 802), das Löcher (801m) zum Durchlassen des Fluides umfasst, wobei das Rückhaltebauteil in einem Überraum des ersten Fluiddurchgangs und/oder des zweiten Fluiddurchgangs zum Zurückhalten einer Strömungsbewegung des Reinigers vorgesehen ist.

7. Reinigerbehältervorrichtung für ein Brennstoffzellensystem gemäß Anspruch 6, wobei der erste Fluiddurchgang (305) an dem Einlassanschluss (601) angeschlossen ist, der zweite Fluiddurchgang (405) an dem Austrittsanschluss (602) angeschlossen ist und eine Größe des Lochs (801m) des Rückhaltebauteils (802), das an dem zweiten Fluiddurchgang (405) vorgesehen ist, kleiner als eine Größe des Lochs (801m) des Rückhaltebauteils (801) ist, das an dem ersten Fluiddurchgang (305) vorgesehen ist.

8. Brennstoffzellensystem, mit:
einer Brennstoffzelle (1), der ein Anodenfluid und ein Kathodenfluid zum Erzeugen von elektrischer Energie zugeführt wird;
einem Umwandlungsabschnitt (3), der das Anodenfluid durch Umwandlung eines Brennstoffs unter Verwendung eines Wasserdampfs ausbildet;
einem Brennstoffdurchgang (6) zum Zuführen des Brennstoffs, um das Anodenfluid zu sein, zu dem Umwandlungsabschnitt (3);
einer Entschwefelung (62), die an dem Brennstoffdurchgang (6) zum Beinhalten eines Entschwefelungsmittels vorgesehen ist, das den Brennstoff durch Entfernen eines in einem Brennstoff enthaltenen Geruchsstoffs als der Reiniger reinigt; wobei
die Entschwefelung mit der Reinigerbehältervorrichtung für das Brennstoffzellensystem gemäß einem der Ansprüche 1 bis 7 aufgebaut ist.

## Revendications

1. Dispositif pour contenant de dépuratif pour un système de cellules à combustible introduisant un fluide en phase gazeuse ou en phase liquide, qui est utilisé au niveau du système de cellules à combustible et doit être épuré, par le biais d'un orifice d'entrée (601) et émettant le fluide épuré vers l'extérieur du dispositif par le biais d'un orifice de sortie (602) après écoulement et modification d'une direction d'écoulement en forme de U correspondante, comprenant :
un élément de plaque intermédiaire (200) comprenant une première surface et une seconde surface ménagées sur des côtés opposés, et une ouverture pour l'écoulement du fluide en forme de U entre l'orifice d'entrée et l'orifice de sortie ;
un premier élément formant un passage de fluide (300) formant un premier passage de fluide (305) à travers lequel s'écoule le fluide ;
un second élément formant un passage de fluide (400) formant un second passage de fluide (405), qui est en communication avec le premier passage de fluide par le biais de l'ouverture ; dans lequel
le premier élément formant un passage de fluide entre en contact avec la première surface de la plaque intermédiaire à joindre à celle-ci par une partie de jonction (701, 702, 703, 704, 721, 723, 901, 902) ;
le second élément formant un passage de fluide entre en contact avec la seconde surface de la plaque intermédiaire à joindre à celle-ci par la partie de jonction, de sorte que le dispositif pour contenant de dépuratif soit scellé ; et
un dépuratif est contenu dans le premier passage de fluide (305) et le second passage de fluide (405),
**caractérisé en ce que**,
la partie de jonction (701, 702, 703, 704, 721, 723, 901, 902) est exposée vers l'extérieur.

2. Dispositif pour contenant de dépuratif pour le système de cellule à combustible selon la revendication 1, dans lequel
le premier élément formant un passage de fluide (300) et le second élément formant un passage de fluide (400) sont réalisés en forme de U, en forme de V, ou en forme de C en coupe transversale, qui est découpée le long d'une direction perpendiculaire à une direction d'écoulement du fluide, depuis son introduction dans l'orifice d'entrée jusqu'à atteindre l'ouverture.

3. Dispositif pour contenant de dépuratif pour le système de cellule à combustible selon la revendication 1 ou 2, dans lequel la partie de jonction (701, 702, 703, 704, 721, 723, 901, 902) est exposée vers l'extérieur au niveau d'une/de la coupe transversale qui est découpée le long d'une direction perpendiculaire à une direction d'écoulement du fluide, de son introduction dans l'orifice d'entrée jusqu'à revenir à l'ouverture.

4. Dispositif pour contenant de dépuratif pour le système de cellule à combustible, selon l'une quelconque des revendications 1 à 3, comprenant en outre :
une première plaque de fermeture (600) jointe à une première extrémité de l'élément de plaque intermédiaire (200), le premier élément formant un passage de fluide (300) et le second élément formant un passage de fluide (400) dans la direction d'écoulement du fluide pour fermer une première extrémité du premier passage de fluide (305) et le second passage de fluide (405) dans une direction longitudinale ; et
une seconde plaque de fermeture (650) jointe à une seconde extrémité de l'élément de plaque intermédiaire (200), le premier élément formant un passage de fluide (300) et le second élément formant un passage de fluide (400) dans la direction d'écoulement du fluide pour fermer une seconde extrémité du premier passage de fluide (305) et du second passage de fluide (405) dans la direction longitudinale.

5. Dispositif pour contenant de dépuratif pour le système de cellule à combustible selon l'une quelconque des revendications 1 à 4, dans lequel une partie d'extrémité latérale (204, 206) de l'élément de plaque intermédiaire (200) est exposée tout en saillant du premier élément formant un passage de fluide (300) et du second élément formant un passage de fluide (400), selon une/la coupe transversale qui est découpée le long d'une direction perpendiculaire à une direction d'écoulement du fluide, depuis son introduction dans l'orifice d'entrée jusqu'à atteindre l'ouverture.

6. Dispositif pour contenant de dépuratif pour le système de cellule à combustible selon l'une quelconque des revendications 1 à 5, le dispositif pour contenant de dépuratif comprenant en outre
un élément de retenue (801, 802) comprenant des orifices (801m) pour faire passer le fluide, l'élément de retenue étant ménagé dans un espace excessif du premier passage de fluide et/ou du second passage de fluide pour limiter un mouvement flottant du dépuratif.

7. Dispositif pour contenant de dépuratif pour le système de cellule à combustible selon la revendication 6, dans lequel le premier passage de fluide (305) est raccordé à l'orifice d'entrée (601), le second passage de fluide (405) est raccordé à l'orifice de sortie (602), et une taille de l'orifice (801m) de l'élément de retenue (802) ménagé sur le second passage de fluide (405) est inférieure à une taille de l'orifice (801m) de l'élément de retenue (801) ménagé sur le premier passage de fluide (305).

8. Système de cellule à combustible, comprenant :
une cellule à combustible (1) à laquelle un fluide d'anode et un fluide de cathode sont fournis pour générer de l'électricité ;
une partie de reformage (3) formant le fluide d'anode en reformant un combustible en utilisant une vapeur d'eau ;
un passage de combustible (6) pour fournir le combustible afin qu'il soit le fluide d'anode à la partie de reformage,
un désulfurant (62) disposé dans le passage de combustible (6) pour contenir un agent de désulfurisation qui purifie le combustible en éliminant un odorant inclus dans un combustible comme dépuratif ; dans lequel
le désulfurant est construit avec le dispositif pour contenant de dépuratif pour le système de cellule à combustible selon l'une quelconque des revendications 1 à 7.
